(19) Europäisches Patentamt
European Patent Office
Office européen des brevets

(11) **EP 1 819 171 A2**

(12) **EUROPEAN PATENT APPLICATION**

(43) Date of publication:
**15.08.2007 Bulletin 2007/33**

(51) Int Cl.:
***H04N 7/26*** *(2006.01)*

(21) Application number: **06026587.3**

(22) Date of filing: **21.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.12.2005 JP 2005375203**

(71) Applicant: **KABUSHIKI KAISHA TOSHIBA**
**Tokyo 105-8001 (JP)**

(72) Inventors:
 • **Kawashima, Yuji**
 **c/o Intellectual Property Division**
 **Minato-ku**
 **Tokyo 105-8001 (JP)**

 • **Kikuchi, Yoshihiro**
 **c/o Intell. Property Division**
 **Minato-ku**
 **Tokyo 105-8001 (JP)**
 • **Fujisawa, Tatsuro**
 **c/o Intell. Property Division**
 **Minato-ku**
 **Tokyo 105-8001 (JP)**

(74) Representative: **HOFFMANN EITLE**
**Patent- und Rechtsanwälte**
**Arabellastrasse 4**
**81925 München (DE)**

(54) **Information processing apparatus**

(57) An information processing apparatus of the present invention includes a decoder (10) which decodes video coded data, and a load information acquisition device (11) which acquires load information required for processing of data other than the video coded data, wherein the decoder (10) predetermines elimination priorities of stepwise filter processing required for decoding the video coded data, obtains a load level from the load information, and in response to the obtained level, eliminates the filter processing in a stepwise manner in accordance with the priorities.

FIG. 1

EP 1 819 171 A2

**Description**

The present invention relates to an information processing apparatus equipped with a function of decoding video coded data.

As a technique standardized for encoding a video, there have been developed: H. 261 and H. 263 of ITU-T (International Telecommunication Union, Telecommunication Standardization Division); and MPEG (Moving Picture Experts Group)-1, MPEG-2, MPEG-4 or the like of ISO (International Standardization Organization). As a next generation video encoding system further developed while inheriting the techniques such as H. 261 to 263 and MPEG-1 to -4, there is exemplified H. 264 in which standardization has been carried out jointly by the ISO and the ITU. In this H. 264, as one of an in-loop filters, there is employed a de-blocking filter for mitigating a distortion generated at a block boundary, and in particular, an image quality improvement effect at a low bit rate is enhanced. It is disclosed by, for example, ITU-T Recommendation H. 264 (2003), "Advanced Video Coding for generic audiovisual services", ISO/IEC 14496-10: 2003, "Information technology, Coding of audio-visual objects - Part 10: Advanced video coding" and H. 264/AVC textbook (Impress Communications Co., Ltd.).

However, an information processing apparatus equipped with a video decode processing function that conforms to standardization specification based on H. 264 described above, actually, has a high rate of a processing quantity of an in-loop filter, particularly a de-blocking filter in the whole decoding process. Thus, in the case where a processing capability of a central processing unit (CPU) or a graphic controller is low or in the case where a whole processing load is high, decode processing in real time lags behind, and frame missing occurs or an object motion becomes extremely slow.

It is an object of the present invention to provide an information processing apparatus capable of carrying out intra-loop filter processing in a stepwise manner while promoting image quality improvement at a low bit rate, and reducing filter processing in accordance with a load level of a whole system to properly carry out decode processing in real time.

An information processing apparatus according to the present invention characterized by comprises: a decoder (10) which decodes video coded data; and a load information acquisition means (11) for acquiring load information required for processing of data other than the video coded data, wherein the decoder (10) predetermines elimination priorities of stepwise filter processing required for decoding the video coded data, obtains a load level from the load information, and in response to the obtained level, eliminates the filter processing in a stepwise manner in accordance with the priorities.

The invention can be more fully understood from the following detailed description when taken in conjunction with the accompanying drawings, in which:

FIG. 1 is a block diagram depicting an example of a basic configuration of one embodiment of an information processing apparatus equipped with a function of decoding a video according to the present invention;
FIG. 2 is a block diagram depicting a specific example of a configuration of a video decoder shown in FIG. 1;
FIGS. 3A and 3B are views each adapted to explain an example of an edge filter-processed at a de-blocking filter section shown in FIG. 2;
FIGS. 4A and 4B are views each adapted to explain an example of filter processing at the de-blocking filter section shown in FIG. 2;
FIG. 5 is a flow chart showing an example of a method for eliminating procedures for filter processing of the de-blocking filter section shown in FIG. 2;
FIG. 6 is a flow chart showing a first embodiment of the filter processing eliminating method shown in FIG. 5;
FIG. 7 is a flow chart showing a second embodiment of the filter processing eliminating method shown in FIG. 6; and
FIG. 8 is a flow chart showing a third embodiment of the filter processing eliminating method shown in FIG. 6.

Now, embodiments of the present invention will be described below with reference to the accompanying drawings.

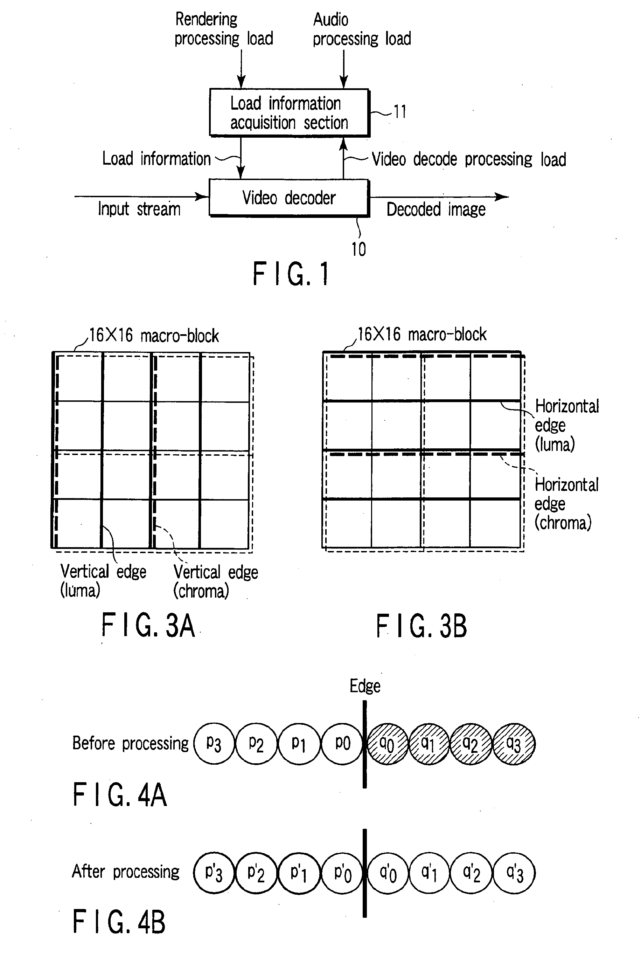

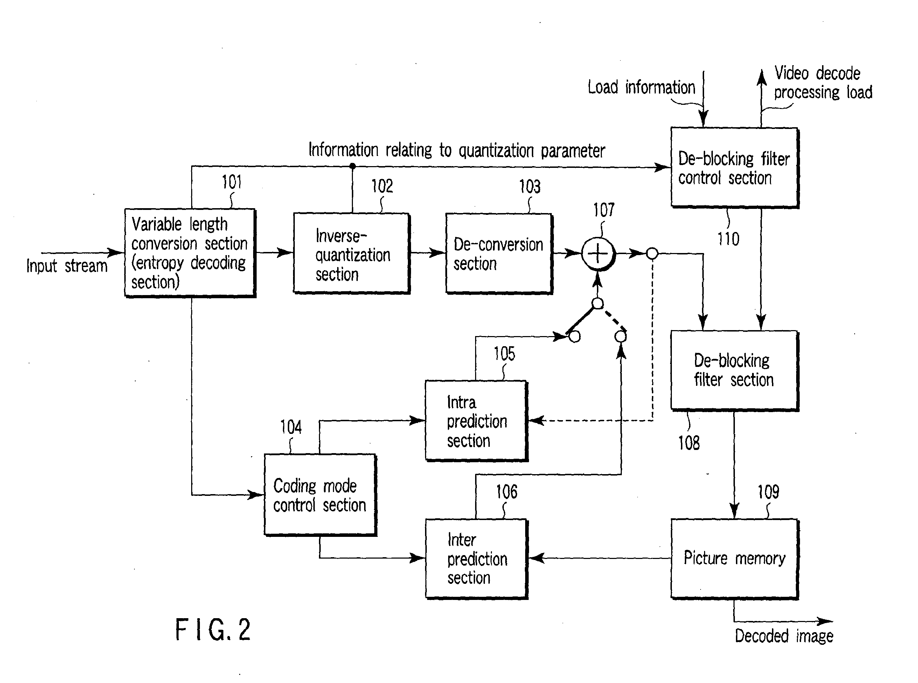

FIG. 1 is a block diagram depicting an example of a basic configuration of one embodiment of an information processing apparatus equipped with a function of decoding a video coded data according to the present invention. The information processing apparatus shown in FIG. 1 supplies a compressed/encoded video stream (video coded data) to be inputted from a transmission system to a video decoder 10 using a graphic controller that conforms to the standard specification based on H. 264, for example; carries out decode processing; and outputs the decoded data. At this time, the video decoder 10 notifies a processing load required for decoding to a load information acquisition section 11. This load information acquisition section 11 acquires information on a rendering processing load and an audio processing load in addition to a video decode processing load, and then, notifies the whole load information to the video decoder 10. The video decoder 10 predetermines elimination priorities of filter processing required for decode processing, based on parameters required for decode processing; obtains a load level from the load information; and then, eliminates filter processing in a stepwise manner in accordance with the priorities, in response to the obtained level.

Acquisition of load information can include: a technique of querying a load to an operating system executed on information processing; and a technique of detecting a load based on a use rate of either a processor or a memory, the processor executing information processing.

FIG. 2 is a block diagram depicting a specific configuration of the video decoder 10 described above. In FIG. 2, an input stream is provided as a stream compressed/encoded in accordance with the H. 264 standard, and sent to a variable length converting section 101 (also referred to as an entropy decoding section). This variable length converting section 101 carries out variable length decoding of an inputted video encoded stream, and then, generates syntax. A de-quantization section 102 and a de-conversion section 103 generate a residual image from a result of decoding the video encoded stream, based on the generated syntax. A coding mode control section 104 judges a coding mode from the decoding result of the variable length converting section 101.

In addition, an intra prediction section 105 and an inter prediction section 106 each generate intra and inter predictive images, respectively, in accordance with a coding mode specified by the coding mode control section 104. The generated predictive image is selectively sent to a residual adder section 107. This residual adder section 107 adds a predictive image from the intra prediction section 105 or inter prediction section 106 and a residual image from the de-conversion section 103, and then, generates a decoded image. The generated decoded image is referred to in the intra prediction section 105 and sent to a de-blocking filter section 108.

On the other hand, with respect to the de-blocking filter section 108, a de-blocking filter control section 110 presets stepwise processing levels relevant to the decoded image generated in advance in the residual adder section 107 in accordance with control information or the information relating to quantization parameters inputted from the variable length decoding section 101 and the inverse quantization section 102. Then, this control section sends to the load information acquisition section 11 the load information required for video decode processing from the information relating to the quantization parameters; receives whole load information from the acquisition section 11; and then, determines a processing level of the de-blocking filter based on that load level. The de-blocking filter section 108 eliminates the filter processing of the inputted decoded image in a stepwise manner, based on that determination. A reconstruction image filter-processed at the de-blocking filter section 108 is stored in a picture memory 109. The reconstruction image stored in the picture memory 109 is output as a decoded image or is referred to in the inter prediction section 106.

As described previously, the video encoding system that conforms to the H. 264 standard achieves a high compression rate by the combination of a number of encoding techniques, whereas it has a problem with a large amount of processing. In particular, as in HD-DVD (high resolution video image DVD), in the case of reproducing a video with high resolution, this problem becomes serious. Among the H. 264 decoders, de-blocking filter processing carries out computation with respect to block edges every four pixels, and thus, an amount of processing is very large. Therefore, the present invention is featured by detecting a load of a variety of processing operations carried out in video image processing such as DVD reproduction processing; and, in the case where a load of audio processing, rendering processing and the like is high, adaptively eliminating de-blocking filter processing, thereby reducing an amount of decoder processing.

That is, according to the above configured video decoder 10 of the present invention, the de-blocking filter control section 110 acquires a parameter "boundary strength" (hereinafter, referred to as "bS") indicating filter strength as a quantizing parameter, and a clipping value "tc" of a pixel change rate; and then, carries out de-blocking filter processing with respect to a vertical edge (luma, chroma) and a horizontal edge (luma, chroma) of a 16 x 16 micro-block as shown in FIGS. 3A and 3B, for example. At this time, a boundary (edge), at which a change of a pixel value due to the de-blocking filter processing as shown in FIGS. 4A and 4B is small, is detected from the filter strength parameter "bS" and the clipping value "tc" of a pixel change rate; and then, the elimination of the de-blocking filter processing is applied preferentially in response to a level of a processing load. In this manner, it is possible to achieve a reduced number of processing steps while preventing an error from being accumulated on a decoded image.

The parameter "bS" of filter strength of the de-blocking filter processing relevant to the above 16 x 16 macro-block is given as follows.

When bS = 4, it follows:

$$p'_0 = (p_2 + 2{\times}p_1 + 2{\times}p_0 + 2{\times}q_0 + q_1 + 4) \gg 3$$

$$p'_1 = (p_2 + p_1 + p_0 + q_0 + 2) \gg 2$$

$$p'_2 = (2{\times}p_3 + 3{\times}p_2 + p_1 + p_0 + q_0 + 4) \gg 3$$

$$q'_0 = (p_1 + 2 \times p_0 + 2 \times q_0 + 2 \times q_1 + q_2 + 4) >> 3$$

$$q'_1 = (p_0 + q_0 + q_1 + q_2 + 2) >> 2$$

$$q'_2 = (2 \times q_3 + 3 \times q_2 + q_1 + q_0 + p_0 + 4) >> 3$$

When bS = 1; 2, or 3, it follows:

$$\Delta = clip3 \ (-t_c, \ t_c, \ ((((q_0 - p_0) << 2) + (p_1 - q_1) + 4) >> 3))$$

$$p'_0 = clip1 \ (p_0 + \Delta)$$

$$p'_1 = p_1 + clip3 \ (-tc_0, \ tc_0, \ (p_2 + ((p_0 + q_0 + 1) >> 1) - (p_1 << 1)) >> 1)$$

$$q'_0 = clip1 \ (q_0 - \Delta)$$

$$q'_1 = q_1 + clip3 \ (-tc_0, \ tc_0, \ (q_2 + ((p_0 + q_0 + 1) >> 1) - (q_1 << 1)) >> 1)$$

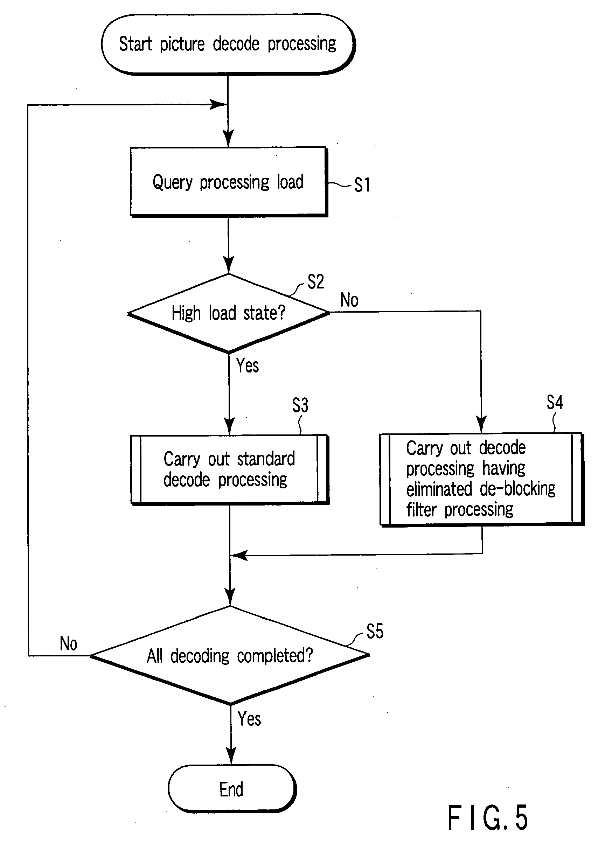

Now, with reference to FIG. 5, a description will be given with respect to a method for eliminating a de-blocking filter processing responsive to a load level according to the present invention.

First, a load state of whole equipment is queried at the time of starting decoding of each picture (step S1); and then, it is judged whether or not a high load state is established (step S2). In the case where the high load state is not established, standard decode processing (including de-blocking filter processing) is carried out (step S3). In the case where the high load state is established, decode processing having eliminated the de-blocking filter processing in a stepwise manner is executed in response to the corresponding load level, the parameter "bS" indicating filter strength, and the clipping value "tc" of a pixel change rate (step S4). The above-described processing is repeated until decoding of all pictures is completed (step S5).

Stepwise elimination of the above filter processing can be achieved in accordance with first to third embodiments.

(First embodiment)

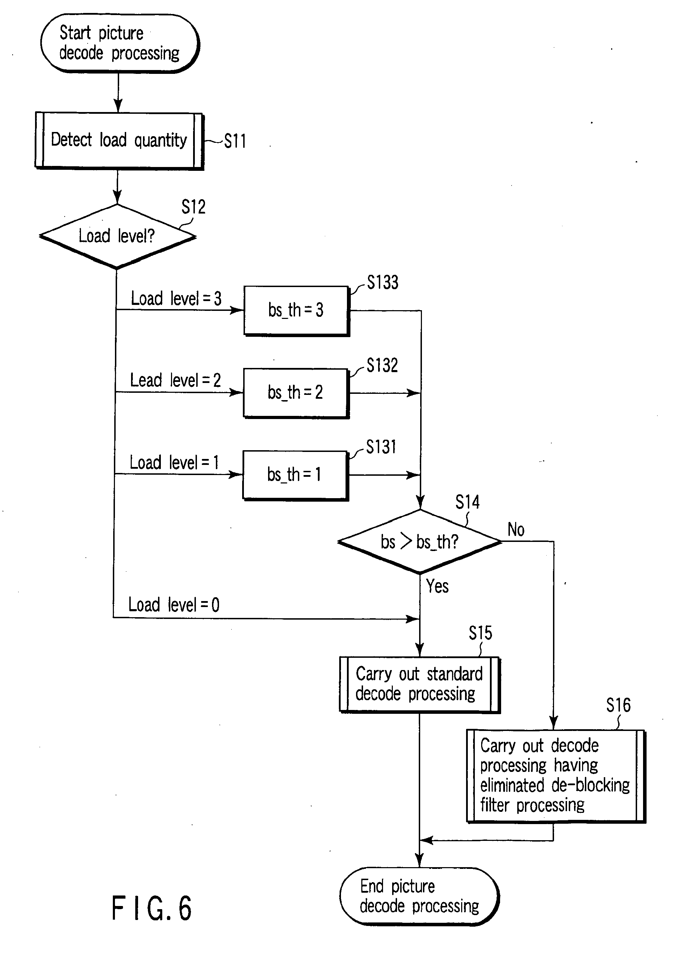

Filter strength parameters bS exist as 0 to 4. The larger value indicates the higher filter strength. As shown in FIG. 6, after detecting a load quantity (step S11), a load level is judged (step S12). Here, when the load level = 1, bS_th = 1 is preset; when the load level = 2, bS_th = 2 is preset; and when the load level = 3, bS_th = 3 is preset (steps S131 to S133); and it is judged whether or not the actually acquired parameter bS is bS > bS_th (step S14). If bS > bS_th, standard decode processing (including de-blocking filter processing) is carried out (step S15). If bS > bS_th is not established, it is judged that a high load state is established, and then, filter processing is executed at a load level that corresponds to the bS value (step S16). When the load level is 0, standard decode processing (step S15) is carried out.

(Second embodiment)

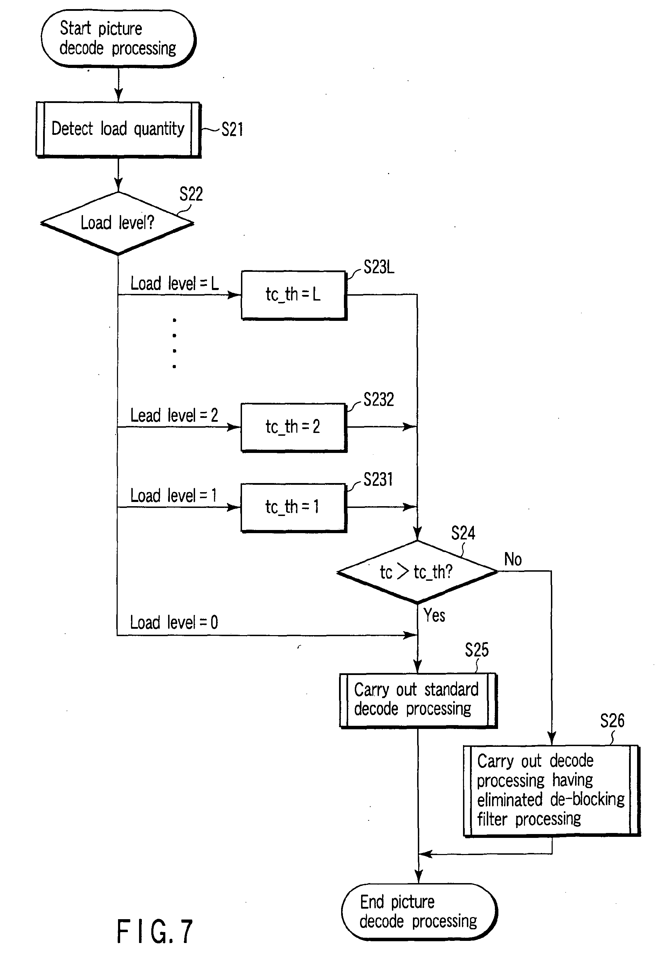

A clipping value "tc" of a pixel change rate is provided as a parameter that exists in the case where a filter strength parameter bS is within the range of 1 to 3. This parameter indicates a clipping value of a pixel change rate with respect to a filter target pixel. Therefore, the larger clipping value tc indicates the higher filter strength. As shown in FIG. 7, after detecting a load quantity (step S21), a load level is judged (step S22). Here, when the load level = 1, tc_th = 1 is preset; when the load level = 2, tc_th = 2 is preset; and when the load level = L, tc_th = L is preset (steps S231 to S23L); and it is judged whether or not the actually acquired parameter tc is tc > tc_th (step S24). If tc > tc_th, standard decode processing (including de-blocking filter processing) is carried out (step S25).. If tc > tc_th is not established, it is judged that a high load state is established, and then, filter processing is executed at a load level that corresponds to the tc value (step S26). When the load level is 0, standard decode processing (step S25) is carried out.

(Third embodiment)

A pixel change rate increases at an edge having higher filter strength. Thus, in the case of eliminating de-blocking filter processing, a pixel error is accumulated, and then, a difference from a correct decoded image becomes large. Therefore, de-blocking filter processing relevant to an edge having small filter strength is eliminated preferentially.

An evaluation value "e" obtained by the formula below is a value proportional to the filter strength "bS". Therefore, de-blocking filter processing is eliminated with respect to an edge having the evaluation value "e" that is smaller than a threshold value θ.

$$e = \gamma \times bS + \phi \times tc$$

$$\theta = f(L) \ (load \ level)$$

In the formula, $\gamma$ and $\phi$ are constants equal to or greater than 0. θ is determined by a function f (L) that returns a larger value as a load level increases. In the formula, although "tc" has been used as a parameter, tc0 may also be used.

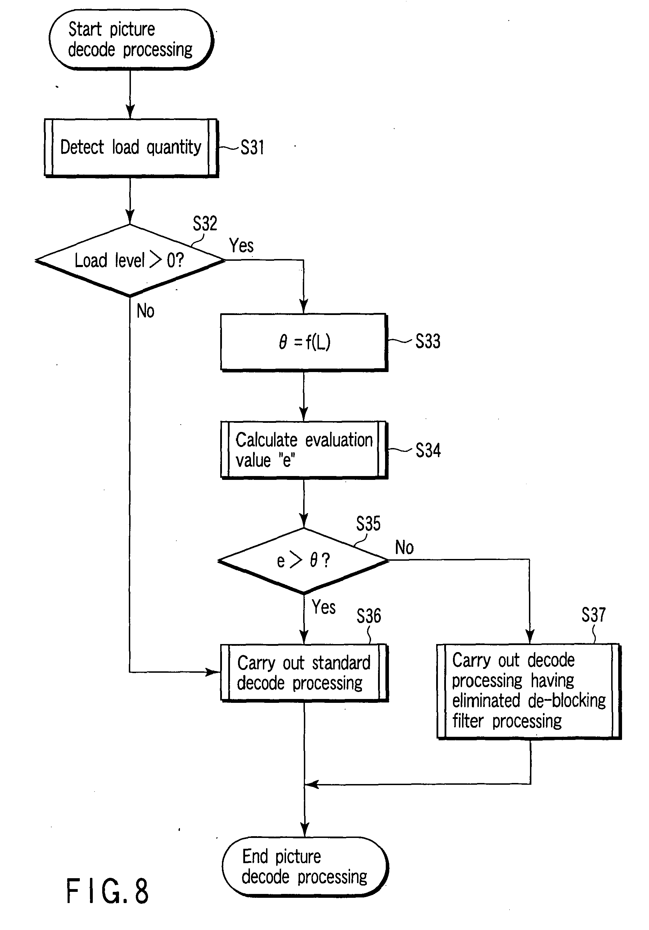

A flow of processing operation according to the third embodiment is shown in FIG. 8. First, after detecting a load quantity (step S31), a load level L > 0 is judged (step S32). When the load level L > 0 in advance, a threshold value θ is defined as θ = f (L) (step S33); an evaluation value "e" is calculated from the above formula (step S34); and the calculated value is compared with the threshold value θ (step S35). In this comparison, if e > θ, standard decode processing (including de-blocking filter processing) is carried out (step S36). If e > θ is not established, it is judged that a high load state is established, and then, filter processing that corresponds to that load level is executed (step S37). In the case where the load level L > 0 is not established in step S32, standard decode processing (step S36) is carried out.

As described above, in the first embodiment, assuming that control of de-blocking filter processing is carried out using a load level and bS, the de-blocking filter processing is executed only at an edge in which the higher load level indicates the higher "bS". In the second embodiment, assuming that control of de-blocking filter processing is carried out using a load level and a clipping value "tc" of a pixel change rate, the de-blocking filter processing is executed only at an edge in which the higher load level indicates the higher "tc". In the third embodiment, assuming that control of de-blocking filter processing is carried out using both of a load level and bS and the clipping value "tc" of a pixel change rate, a threshold value θ, which is larger as the load level is higher, and an evaluation value are compared with each other, and de-blocking filter processing is executed only at an edge having an evaluation value "e" that is greater than θ.

In any embodiment, in response to a level of a processing load, de-blocking filter processing can be eliminated preferentially in a stepwise manner, and a reduced number of processing steps can be achieved while preventing error accumulation of a decoded image.

As has been described above, according to the present invention, the priorities of eliminating filter processing is predetermined based on parameters required for decoding of the video coded data; a load level is obtained from load information required for processing of data other than the video coded data; and in response to that level, filter processing is eliminated in a stepwise manner in accordance with the priorities, whereby a load of filter processing is reduced in a stepwise manner in response to another data processing load level so as not to have an effect on a decode processing speed. As a result, while promoting image quality improvement at a low bit rate, in-loop filter processing is carried out in a stepwise manner, and then, filter processing is reduced in response to a load level of a whole system, thereby making it possible to properly carry out decode processing in real time. In addition, for use in a portable computer, if information such as battery residue or power saving mode is monitored as part of load information, decode processing can be effectively continued while reducing power consumption of video decode processing when the battery residue is short or when power saving mode is selected.

The decode processing described above is applicable in the case where it is carried out in any of CPU and a graphic controller. In addition, the decode processing can be achieved as the video image decode processing function as described above. At the same time, the above decode processing can be achieved as a video decoding method comprising as means the characterizing steps included in the mobile image decoding method. In addition, the above processing can be implemented as a program that causes a computer to execute these steps. In addition, such a program can be distributed via a recording medium such as CD-ROM or a transmission medium such as the Internet.

**Claims**

1. An information processing apparatus **characterized by** comprising:

   a decoder (10) which decodes video coded data; and
   a load information acquisition means (11) for acquiring load information required for processing of data other than the video coded data,

   wherein the decoder (10) predetermines elimination priorities of stepwise filter processing required for decoding the video coded data, obtains a load level from the load information, and in response to the obtained level, eliminates the filter processing in a stepwise manner in accordance with the priorities.

2. The information processing apparatus according to claim 1, **characterized in that** the decoder (10) comprises:

   a prediction means (101) for generating a predictive image in accordance with a coding mode decoded from the video coded data;
   an inverse quantization/inverse transformation means (102, 103) for generating a residual image from quantized orthogonal transform coefficients decoded from the video coded data;
   a residual adder (107) which adds the predictive image and the residual image to generate a decoded image; and
   a filter processor (108, 110) which carries out filter processing for reducing a block distortion of the decoded image in a stepwise manner, and
   the filter processor (108, 110) comprises:

      detecting a level of a processing load from load information acquired by the load information acquisition device (11);
      detecting a boundary at which a change of a pixel value using the filter processing is small from parameters required for the filter processing; and
      sequentially eliminating boundaries from a boundary at which a change of the pixel value is small, in response to a level of the processing load, and then, carrying out filter processing.

3. The information processing apparatus according to claim 2, **characterized in that** the filter processor (108, 110) uses at least one of filter strength and a clipping value of a pixel change rate as a parameter required for the filter processing.

4. The information processing apparatus according to claim 1, **characterized in that** the load information acquisition means (11) for queries a load level to an operating system executed on information processing.

5. The information processing apparatus according to claim 1, **characterized in that** the load information acquisition means (11) for detecting the load level based on a use rate of at least either of a processor and a memory, the processor executing the information processing.

6. The information processing apparatus according to claim 1, **characterized in that** the decoder (10) inputs and decodes data based on H. 264 recommended by ITU (International Telecommunication Union, Telecommunication Standardization Division) as the video coded data.

7. An information processing apparatus **characterized by** comprising:

   a processor (10) which carries out decode processing of a video coded data; and
   a load information acquisition means (11) for acquiring load information required for processing of data other than the video coded data during a period in which the processor executes a program,

   wherein the processor (10) comprises:

decoding the video coded data to generate a predictive image;
de-quantizing and inverse transform a quantized orthogonal transform coefficient from the video coded data to generate a residual image;
adding the predictive image and the residual image to generate a decoded image; and
carrying out filter processing for reducing a block distortion of the decoded image in a stepwise manner, and the filter processing comprises:

detecting a level of a processing load from the load information acquired by the load information acquisition means (11);
detecting a boundary at which a change of a pixel value using the filter processing is small, from parameters required for the filter processing; and
sequentially eliminating boundaries from a boundary at which a change of the pixel value is small, in response to a level of the processing load, and then, carrying out filter processing.

8. A computer-readable memory containing program instructions for decoding video coded data, the memory **characterized by** comprising:

performing a function of decoding the video coded data to generate a predictive image;
performing a function of inverse quantization and inverse transforming a orthogonal transform coefficient quantized from the video coded data to generate a residual image;
performing a function of adding the predictive image and the residual image to generate a decoded image; and
performing a function of carrying out filter processing for reducing a block distortion of each screen of the decoded image in a stepwise manner, the filter processing comprising:

performing a function of detecting a level of a processing load from load information required for processing of data other than the video coded data;
performing a function of detecting a boundary at which a change of a pixel value using the filter processing is small, from parameters required for the filter processing; and
performing a function of sequentially eliminating boundaries from a boundary at which a change of the pixel value is small, in response to a level of the processing load, and then, carrying out filter processing.

F I G. 1

F I G. 3A

F I G. 3B

Before processing

F I G. 4A

After processing

F I G. 4B

FIG. 2

Start picture decode processing

Query processing load — S1

S2

High load state? — No

Yes

S3

Carry out standard decode processing

S4

Carry out decode processing having eliminated de-blocking filter processing

No

All decoding completed? — S5

Yes

End

FIG.5

Start picture
decode processing

Detect load quantity —S11

S12

Load level?

Load level = 3 → bs_th = 3 ⌐S133

Lead level = 2 → bs_th = 2 ⌐S132

Load level = 1 → bs_th = 1 ⌐S131

S14

bs > bs_th? — No

Load level = 0

Yes

S15

Carry out standard
decode processing

S16

Carry out decode
processing having
eliminated de-blocking
filter processing

End picture
decode processing

F I G. 6

Start picture
decode processing

Detect load quantity — S21

Load level? — S22

Load level = L → tc_th = L — S23L

⋮

Lead level = 2 → tc_th = 2 — S232

Load level = 1 → tc_th = 1 — S231

Load level = 0

tc > tc_th? — S24

No

Yes

Carry out standard
decode processing — S25

Carry out decode
processing having
eliminated de-blocking
filter processing — S26

End picture
decode processing

FIG. 7

Start picture
decode processing

Detect load quantity ⎯S31

S32

Load level > 0? ⎯ Yes

No

$\theta = f(L)$ ⎯S33

Calculate evaluation
value "e" ⎯S34

S35

e > $\theta$ ? ⎯ No

Yes  S36

Carry out standard
decode processing

S37

Carry out decode
processing having
eliminated de-blocking
filter processing

End picture
decode processing

FIG.8

**EP 1 819 171 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Advanced Video Coding for generic audiovisual services. *ITU-T Recommendation H. 264,* 2003
- Information technology, Coding of audio-visual objects - Part 10: Advanced video coding. *ISO/IEC,* 2003, 14496-10
- H. 264/AVC textbook. Impress Communications Co., Ltd,